# EUROPÄISCHE PATENTANMELDUNG

(11) **EP 1 327 809 A1**
(43) Veröffentlichungstag der Anmeldung: **16.07.2003**
(21) Anmeldenummer: 02075090.7
(22) Anmeldetag: 11.01.2002
(51) Int. Cl.: F16K 31/40

(54) **Elektromagnetisches Hochdruckgasventil**

(71) Anmelder: LUXEMBOURG PATENT COMPANY S.A., 1720 Luxembourg (LU); Offenwanger GmbH, 75245 Neulingen-Goebrichen (DE)
(72) Erfinder: Offenwanger, Wolfgang, 75245 Neulingen-Goebrichen (DE); Perthel, Klaus Martin, 1130 Luxembourg (LU); Hinnerwisch, Sven, 54457 Wincheringen (DE)
(74) Vertreter: Weydert, Robert

(57) **Zusammenfassung**

Das elektromagnetische Hochdruckgasventil (18) für ein Gasflaschenventil für einen gasbetriebenen Kraftfahrzeugmotor hat einen Durchflussbegrenzer (84) in einem Gasdruckabbaukanal (80), der durch einen Ventilkolben (62) von einem mit einem Ventilsitz (36) zusammenwirkenden Ende des Kolbens zu dem anderen Ende des Kolbens führt. Beim Betrieb des Motors kann sich der Gasdruck am anderen Ende des Kolbens (62) durch den Gasdruckabbaukanal (80) abbauen, damit der Kolben (62) durch den in der Gasflasche herrschenden Druck geöffnet werden kann. Beim Betanken der Gasflasche verhindert der Durchflussbegrenzer (84), dass ein hoher Gasdruck sich am anderen Ende des Kolbens (62) aufbauen kann, der den Kolben (62) in Schliessstellung drücken würde.

## Beschreibung

Die Erfindung betrifft ein elektromagnetisches Hochdruckgasventil, insbesondere für eine elektromagnetische Zweiweg-Gasflaschenventil-Baugruppe für einen gasbetriebenen Kraftfahrzeugmotor, zur Steuerung der Druckgasströmung in die Gasflasche beim Betanken sowie zur Steuerung der Druckgasströmung aus der Gasflasche zu dem Kraftfahrzeugmotor beim Betrieb des Motors. Eine solche elektromagnetische Gasflaschenventil-Baugruppe ist bekannt und z.B. beschrieben in der EP-Patentschrift 0 668 468. Die bekannte Ventil-Baugruppe hat ein in dem Behälter liegendes elektromagnetisches Hochdruckgasventil, ein manuelles Absperrventil sowie ein thermisches Druckminderventil.

Die Erfindung schafft ein verbessertes elektromagnetisches Hochdruckgasventil für eine solche elektromagnetische Gasflaschenventil-Baugruppe, das beim Betanken des Behälters Geräusche und Fehlfunktionen verhindern soll.

Zur Lösung dieses Problems schafft die Erfindung ein elektromagnetisches Hochdruckgasventil , insbesondere für ein Gasflaschenventil für einen gasbetriebenen Kraftfahrzeugmotor, mit einem Ventilgehäuse, einem in einer Bohrung des Ventilgehäuses zwischen einer Ventiloffenstellung und einer Ventilschliessstellung beweglichen Kolben, einer Ankereinrichtung an einem Ende des Kolbens und einer Magnetspule zur Betätigung der Ankereinrichtung, wobei der Kolben am anderen Ende eine ringförmige Dichtfläche aufweist zur Auflage an einem Ventilsitz, ein Gasdruckabbaukanal durch den Kolben von einem verengten Durchlass an dem einen Ende des Kolbens zu einer Auslassöffnung führt, die an dem anderen Ende des Kolbens radial innerhalb der Dichtfläche liegt, und an dem einen Ende des Kolbens ein erster Druckraum (104) gebildet ist, der teilweise durch den Kolben begrenzt ist und in Fluidverbindung steht mit einem zweiten Druckraum, der teilweise durch eine ringförmige Kolbenfläche radial ausserhalb der Dichtfläche am anderen Kolbenende begrenzt ist, wobei die Ankereinrichtung einen Dichtkörper hat, der den verengten Durchlass verschliesst wenn die Magnetspule entregt ist und durch Erregung der Magnetspule der Dichtkörper von dem verengten Durchlass wegzubewegen ist, damit der Gasdruck aus dem ersten Druckraum durch den verengten Durchlass den Gasdruckabbaukanal und die Auslassöffnung entweichen kann und der Kolben durch den die ringförmige Kolbenfläche beaufschlagenden Gasdruck von einer ersten Druckgasquelle aus der Schliessstellung in die Offenstellung beweglich ist, und wobei in dem Gasdruckabbaukanal eine Einrichtung vorgesehen ist zum Begrenzen der Gasströmung in umgekehrter Strömungsrichtung durch den Gasdruckabbaukanal von der Auslassöffnung durch den verengten Durchlass in den ersten Druckraum bei Hochdruckbeaufschlagung des Kolbens radial innerhalb der Dichtfläche an dem anderen Kolbenende über eine zweite Druckgasquelle, um den Kolben bei entregter Magnetspule in Offenstellung zu drängen.

Vorzugsweise ist die Einrichtung zum Begrenzen der Gasströmung ein Rückschlagventil wie z.B. ein Einwegventil und die Strömungsbegrenzungseinrichtung ist in dem Gasdruckabbaukanal des Kolbens zurückgehalten durch einen in den Gasdruckabbaukanal eingesetzten Hohlstift durch den der Gasdruckabbaukanal führt. Der Kolben kann auf der anderen Seite mit einem Dichtring versehen sein, der die Dichtfläche aufweist, wobei der Hohlstift dann sowohl den Dichtring als auch die Strömungsbegrenzungseinrichtung am Kolben zurückhält.

Eine Feder kann in dem Gehäuse um den Kolben angeordnet sein, die den Kolben in die Schliessstellung drückt.

Bei einem vorteilhaften Ausführungsbeispiel hat die Ankereinrichtung einen ersten Anker, sowie einen zweiten Anker, der zwischen dem ersten Anker und dem Kolben angeordnet ist und ein Distanzstift erstreckt sich zwischen dem ersten Anker und dem Kolben. Des Weiteren ist eine Feder vorgesehen, die den Dichtkörper und über diesen den zweiten Anker in Richtung zu dem Kolben drückt, um den verengten Durchlass durch den Dichtkörper zu verschliessen. Bei dem bevorzugten Ausführungsbeispiel weisen beide Anker eine Längsbohrung auf und ein Stift erstreckt sich aus der Längsbohrung des einen Ankers in die Längsbohrung des anderen Ankers, wobei der Stift in dem ersten Anker eine Sitzfläche für die Feder hat und in dem zweiten Anker an einem Dichtringtragstück befestigt ist. Der zweite Anker weist an seinem kolbenseitigen Ende eine einwärts gerichtete Lippe auf, die eine Auflagefläche für den Dichtring hat und die über einen Vorsprung des Kolbens beweglich ist, wobei dieser Vorsprung den verengten Durchlass aufweist.

Des Weiteren steht bei dem bevorzugten Ausführungsbeispiel der zweite Druckraum in Fluidverbindung mit dem ersten Druckraum über mindestens einen Durchbruch in dem Ventilgehäuse, der zu einem mit dem ersten Druckraum kommunizierenden Innenbereich des Ventils führt. Der Durchbruch vom Innenbereich des Ventilgehäuses führt zu der Ventilgehäuseaussenseite und steht in Verbindung mit dem zweiten Druckraum längs einem äusserem Einschraubgewinde des Ventilgehäuses, wobei das Einschraubgewinde als Drosseleinrichtung wirkt.

Die Erfindung wird nun ausführlicher beschrieben mit Bezug auf die beiliegenden Zeichnungen, es zeigen:
Figur 1 die elektromagnetische Gasflaschenventil-Baugruppe in Perspektive,
Figur 2 die Gasflaschenventil-Baugruppe nach Figur 1 im Längsschnitt mit schematisch, schraffiert dargestelltem Hochdruckgasventil,
Figur 3 eine Längsschnittansicht des elektromagnetischen Hochdruckgasventils der Ventilbaugruppe nach den Figuren 1 und 2, wobei das Ventil geschlossen ist,
Figur 4 eine Längsschnittansicht des elektromagnetischen Hochdruckgasventils der Ventilbaugruppe nach den Figuren 1 und 2, wobei das Ventil offen ist zur Gaszuführung aus der Gasflasche zu dem Motor während dem Betrieb desselben,
Figur 5 eine Längsschnittansicht des elektromagnetischen Hochdruckgasventils der Ventilbaugruppe nach den Figuren 1 und 2, wobei das Ventil offen ist beim Betanken der Gasflasche,
Figur 6 einen vergrösserten Ausschnitt des kolbenseitigen Endes des elektromagnetischen Hochdruckgasventils in der Offenstellung nach Figur 4, und
Figur 7 einen vergrösserten Ausschnitt des kolbenseitigen Endes des elektromagnetischen Hochdruckgasventils in der Offenstellung nach Figur 5.

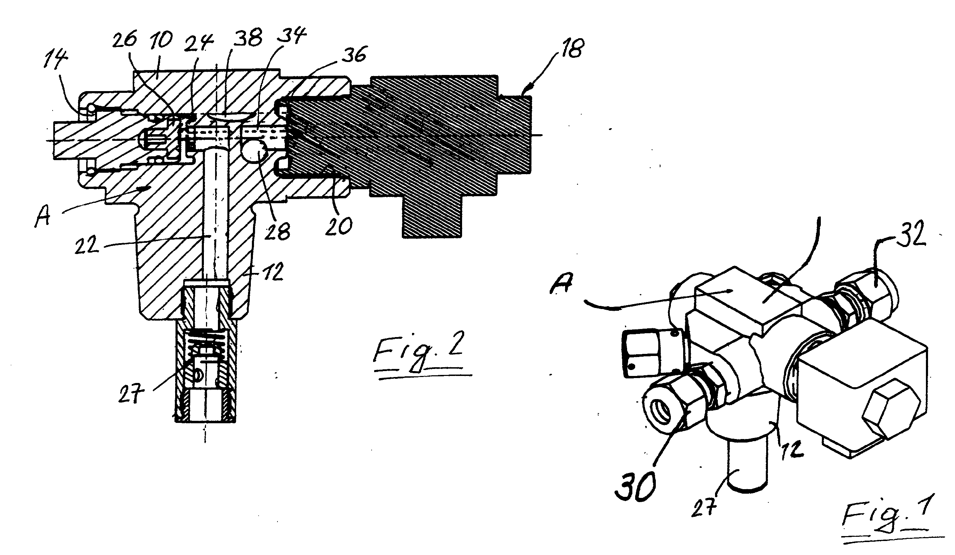

Wie die Figuren 1 und 2 zeigen hat die elektromagnetische Gasflaschenventil-Baugruppe A einen Ventilkörper 10 mit einem unteren, kegelförmigen Ansatz 12, der mit Gewinde (nicht dargestellt) versehen ist zum Einschrauben in eine Gasflasche (nicht dargestellt). Der Ventilkörper 10 hat oberhalb des kegelförmigen Ansatzes 12 eine erste, horizontale Bohrung 14 in die ein manuelles Absperrventil 16 eingesetzt ist. Auf der gegenüberliegenden Seite des Absperrventiles 16 ist ein elektromagnetisches Hochdruckgasventil 18 (schematisch schraffiert dargestellt) in eine zweite, horizontale Bohrung 20 des Ventilkörpers 10 eingeschraubt. Ein Gasstromkanal 22 ist in dem Ventilkörper 10 geformt und erstreckt sich vom unteren Ende des kegelförmigen Ansatzes 12 nach oben und mündet in die erste, horizontale Bohrung 14 durch die Bodenfläche desselben und ist von einem Ventilsitz 24 umgeben. Bei verschlossenem Absperrventil 16 liegt ein Dichtkörper 26 des Absperrventils 16 dicht auf dem Ventilsitz 24 auf. Ein Durchflussbegrenzer 27 ist am unteren Ende des Kanals 22 in den Ventilkörper 10 eingeschraubt.

Ein weiterer Gasstromkanal 28, siehe Figur 2, erstreckt sich in horizontaler Richtung quer durch den Ventilkörper 10 oberhalb des Ansatzes 12. Eine erste Verschraubung 30 befindet sich auf einer Seite des Ventilkörpers 10 an einem Ende des Kanals 28, z.B. zum Anschluss einer Betankungsleitung (nicht dargestellt) an den Gasstromkanal 28. Auf der anderen Seite des Ventilkörpers 10 ist eine zweite Verschraubung 32 vorgesehen zum Anschluss einer zum Motor führenden Gasleitung (nicht dargestellt) an das auf der anderen Seite des Ventilkörpers 10 liegende Ende des Gasstromkanals 28. Zwischen den beiden Enden des Gasstromkanals 28 führt ein Abzweigkanal 34 von dem Gasstromkanal 28 in die zweite horizontale Bohrung 20 und mündet in diesselbe durch ihre Bodenfläche. Ein Ventilsitz 36 umgibt die Einmündung des Abzweigkanals 34 in die zweite horizontale Bohrung 20. Bei verschlossenem Hochdruckgasventil 18 liegt ein Dichtring dieses Ventils dicht an dem Ventilsitz 36 an, wie noch im Späteren beschrieben wird. Ein Überströmkanal 38 verbindet die beiden horizontalen Bohrungen 14 und 20 miteinander. Beim Betanken strömt Hochdruckgas von einer Druckgasquelle durch die Betankungsleitung (nicht dargestellt), die an die Verschraubung 30 angeschlossen ist auf einer Seite in den Querkanal 28 und gelangt durch den Abzweigkanal 34 zu dem elektromagnetischen Hochdruckgasventil 18, drängt dieses in Offenstellung und tritt in die zweite horizontale Bohrung 20 ein. Das Hochdruckgas strömt dann durch den Überströmkanal 38 zu der ersten horizontalen Bohrung 14 und gelangt schliesslich bei geöffnetem Absperrventil 16 durch den Gasstromkanal 22 in den Gastank oder Gasbehälter. Beim Betrieb des Motors strömt das Hochdruckgas aus dem Gastank in umgekehrter Strömungsrichtung durch den Gasstromkanal 22 und gelangt bei geöffnetem Absperrventil 16 in die erste Bohrung 14 und dann durch den Überströmkanal 38 in die zweite Bohrung 20. Wenn eine Magnetspule des Hochdruckgasventils 18 erregt ist kann dieses Ventil durch das Hochdruckgas aus der Gasflasche geöffnet werden (wie noch im Späteren beschrieben wird) und das Hochdruckgas kann aus der zweiten Bohrung 20 durch den Abzweigkanal 34 in den Querkanal 28 einströmen und aus diesem gelangt es über die Gaszufuhrleitung (nicht dargestellt) die an die zweite Verschraubung 32 angeschlossen ist zu dem Motor. Dabei ist die Betankungsleitung verschlossen.

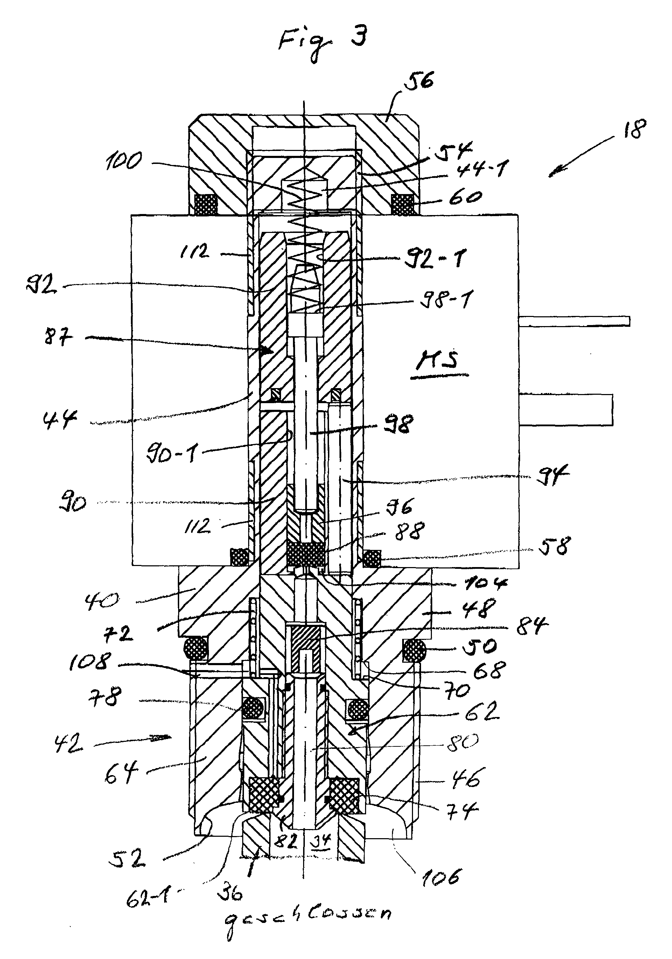

Im Folgenden wird nun das elektromagnetische Hochdruckgasventil 18 mit Bezug auf die Figuren 3-7 beschrieben. Das Hochdruckgasventil 18 hat ein hohlzylindrisches Ventilgehäuse 40 mit einem unteren Einschraubteil 42, und einen oberen, hülsenförmigen Verlängerungsteil 44, mit kleinerem Durchmesser, der am oberen Ende verschlossen ist. Der Einschraubteil 42 hat ein äusseres Einschraubgewinde 46 sowie oberhalb des Einschraubgewindes 46 einen Sechskantflansch 48 zum Erfassen durch einen Schraubschlüssel zum Einschrauben des Hochdruckgasventils 18 in die zweite, horizontale Bohrung 20 des Ventilkörpers 10. Zwischen dem Aussengewinde 46 und dem Sechskantflansch 48 befindet sich eine Nut, in der ein Dichtring 50 angeordnet ist zum Abdichten des Gasventils 18 in der Bohrung 20 gegenüber dem Ventilkörper 10. Das untere Ende des Einschraubteils 42 hat eine konkav geformte Ringfläche 52. Der obere, hülsenförmige Verlängerungsteil 44 hat am oberen Ende ein Aussengewinde 54 auf das eine Kappe 56 mit Innengewinde aufgeschraubt ist. Eine Magnetspule MS ist über den oberen, hülsenförmigen Teil 44 aufgesetzt und wird durch die aufgeschraubte Kappe 56 zurückgehalten. Dichtringe 58 und 60 befinden sich zwischen der Magnetspule MS und dem zylindrischen Ventilgehäuse 40 bzw. zwischen der Magnetspule MS und der Kappe 56 damit kein Kondenswasser in die Magnetspule MS eindringen kann.

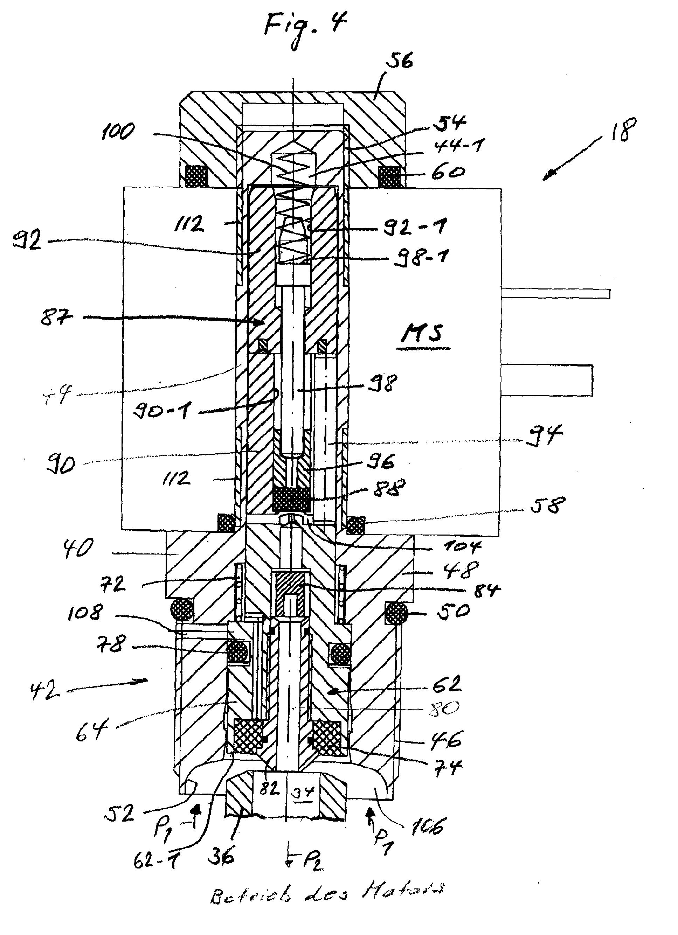

Ein Ventilkolben 62 ist im Inneren des hohlzylindrischen Ventilgehäuses 40 verschiebbar aufgenommen und ist in dem Ventilgehäuse 40 axial beweglich zwischen einer unteren oder Ventilschliessstellung (Figur 3) und einer oberen oder Ventiloffenstellung (Figuren 4-7). Der Kolben 62 hat einen unteren Kopfteil 64 und einen oberen Schaftteil 66 mit kleinerem Durchmesser als der Kopfteil 64. Der Kopfteil 64 ist in einer unteren Bohrung 63 mit grossem Durchmesser des Ventilgehäuses 40 geführt während der Schaftteil 66 in einer oberen Bohrung 65 mit kleinerem Durchmesser des Ventilgehäuses 40 geführt ist. Die unter Bohrung 63 ist unten offen in der konkav geformten Ringfläche 52 des Ventilgehäuses 40. Am oberen Ende der unteren Bohrungen 63 des Ventilgehäuses 40 befindet sich eine radiale Schulterfläche 68, die mit einer radialen Schulterfläche 70 des Kolbens zusammenwirkt, welche zwischen dem unteren Kopfteil 64 und dem oberen Schaftteil 66 des Kolbens 62 geformt ist, um die obere Offenstellung des Kolbens 62 zu begrenzen. Eine Feder 72 drückt den Kolben 62 nach unten in die Schliessstellung (Figur 3), in welcher eine am unteren Ende des Kolbens 62 vorgesehene, nach unten weisende, ringförmige Dichtfläche 71 in dichter Berührung mit dem Ventilsitz 36 in der zweiten Bohrung 20 des Ventilkörpers 10 ist, siehe Figur 2. Die Feder 72 stützt sich einerseits auf der Schulterfläche 70 des Kolbens und andererseits auf einer Schulterfläche 76 am unteren Ende der oberen Bohrung 65 des zylindrischen Ventilgehäuses 40 ab und umgibt den oberen Schaftteil 66 des Kolbens 62. Die Feder 72 befindet sich in einer Zwischenbohrung 73 zwischen den Schultern 68 und 76 des Ventilgehäuses 40 und hat einen kleineren Durchmesser als die Bohrung 63 jedoch einen grösseren Durchmesser als die Bohrung 65. Ein Dichtring 78 befindet sich in einer Nut des Kolbenkopfteiles 64 zum Abdichten des Kolbens 62 in der unteren Bohrung 63 mit grossem Durchmesser des zylindrischen Ventilgehäuses 40.

In den Kolben 62 ist von unten ein Hohlstift 82 eingeschraubt, welcher einen mit der Dichtfläche 71 versehenen Dichtring 74 in einer Vertiefung des Kolbens 62 zurückhält. Ein zentraler Gasdruckabbaukanal 80 erstreckt sich axial durch den Kolben 62 und den Hohlstift 82 und hat eine Auslassöffnung 80A am unteren Ende des Hohlstiftes 82, d.h. am unteren Ende des Kolbens 62 radial innerhalb der Dichtfläche 71 sowie einen verengten Durchlass 80B am oberen Ende des Kolbens 62 in einem kleinen, nach oben ragenden axialen Vorsprung oder Ansatz 67 des Kolbenschaftteiles 66. Der Gasdruckabbaukanal 80 hat in seinem oberen Teil oberhalb des oberen Endes des Hohlstiftes 82 eine radiale Schulterfläche 80C zwischen zwei Bohrungsabschnitten 80-1, 80-2 mit unterschiedlichem Durchmesser. In dem Bohrungsabschnitt mit grösserem Durchmesser 80-2 und axial zwischen der Schulterfläche 80C und dem oberen Ende des Hohlstiftes 82 befindet sich eine Einrichtung 84 zur Begrenzung der Strömung in dem Gasdruckabbaukanal 80 von der Öffnung 80A am unteren Ende des Hohlstiftes 82 zu dem verengten Durchlass 80B am oberen Ende des Gasdruckabbaukanals 80.

Um den Druck hinter der Dichtung 74 abzubauen führt ein Kanal 75-1, 75-2 durch den Ventilkolben 62 von der Grundfläche 79 einer Kolbenaussparung für die Dichtung 74 zum Inneren des Ventilgehäuses 40 oberhalb der Schulterfläche 70.

Eine Ankereinrichtung 87 mit einem unteren Anker 90 und einem oberen Anker 92, beide aus magnetischem Material hergestellt, befindet sich in dem oberen, hülsenförmigen Verlängerungsteil 44 des Ventilgehäuses 40. Der untere Anker 90 befindet sich in Axialrichtung zwischen dem oberen Anker 92 und dem Ventilkolben 62. Ein Distanzstift 94 erstreckt sich längs dem unteren Anker 90 von der oberen Endfläche des Kolbens 62 zu der unteren Endfläche des oberen Ankers 92. Der untere Anker 90 hat eine axiale Längsbohrung 90-1, in der ein Tragstück 96 für einen Dichtkörper 88 verschiebbar aufgenommen. Der Dichtkörper 88 befindet sich in der Bohrung 90-1 des unteren Ankers 90 und wirkt mit dem verengten Durchlass 80B zusammen. Eine radial einwärts gerichtete, ringförmige Lippe 90-2 am unteren Ende der Bohrung 90-1 des unteren Ankers 90 greift unter den Dichtkörper 88, welcher in der Bohrung 90-1 verschiebbar zurückgehalten ist zwischen dem Tragstück 96 und der radial einwärts gerichteten Lippe 90-2. Der kleine axiale Ansatz 67 mit dem verengten Durchlass 80B am oberen Ende des Schaftteiles 66 des Kolbens 62 kann sich durch die ringförmige Lippe 90-2 in die Längsbohrung 90-1 des unteren Ankers 90 erstrecken. Ein Stift 98 ist in dem Tragstück 96 aufgenommen und ragt aus der Längsbohrung 90-1 des unteren Ankers in eine zentrale, axiale Längsbohrung 92-1 des oberen Ankers 92. Eine Druckfeder 100 sitzt mit einem Ende in einer Sackbohrung 44-1 am verschlossenen oberen Ende des oberen, hülsenförmigen Verlängerungsteiles 44 des Ventilgehäuses 40 und wirkt mit dem anderen, unteren Ende gegen eine Schulterfläche 98-1 des Stiftes 98 innerhalb der Längsbohrung 92-1 des oberen Ankers 92.

Zu erwähnen ist noch, dass auf dem oberen, hülsenförmigen Verlängerungsteil des zylindrischen Ventilgehäuses 40 Clips 112 aus magnetischem Material vorgesehen sind, die den magnetischen Fluss erhöhen.

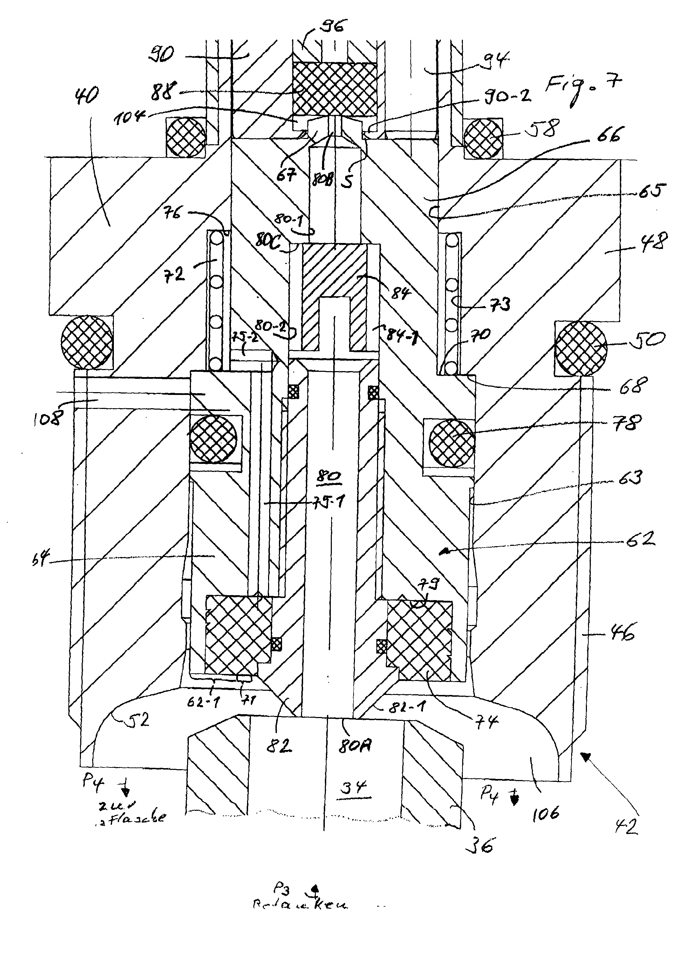

In geschlossenem Zustand (Figur 3) des Hochdruckgasventils 18 sitzt der Dichtkörper 74 auf dem Ventilsitz 36 und die Magnetspule MS ist stromlos. Die Feder 72 drückt den Kolben 62 nach unten in die Schliessstellung und die Druckfeder 100 drückt über den Stift 98 den Dichtkörper 88 nach unten auf den Ansatz 67 des Kolbens 62 zum Verschliessen des verengten Durchlasses 80B. Der untere Anker 90 sitzt auf dem Kolben 62 und der Ansatz 67 des Kolbens 62 ragt mit Radialspiel durch die ringförmige Lippe 90-2 in die Längsbohrung 90-1 des unteren Ankers 90, so dass ein Ringspalt S (Figur 7) zwischen der Lippe 90-2 und dem Ansatz 67 vorliegt. Ein erster Druckraum 104 befindet sich am oberen Ende des Kolbens 62 und ist teilweise durch den Kolben 62 sowie auch durch den unteren Anker 90 und den Dichtkörper 88 begrenzt.

Bei geöffnetem Handabsperrventil 16 (Figur 2) steht der Gasdruck der Gasflasche, die eine erste Druckgasquelle darstellt, in Verbindung mit einem unteren, zweiten Druckraum 106, der den Ventilsitz 36 umgibt und zwischen der konkav geformten Fläche 52 des zylindrischen Ventilgehäuses 40 und der Grundfläche der zweiten Bohrung 20 des Ventilkörpers 10 eingeschlossen ist sowie auch zum Teil durch eine untere, ringförmige Kolbenfläche 62-1 radial ausserhalb der ringförmigen Dichtfläche 71 des Kolbens 62 (des Kolbendichtringes 74) begrenzt ist. Die ringförmige Kolbenfläche 62-1 befindet sich zum Teil am Kolbenkörper sowie am Dichtring 74, der Bestandteil des Kolbens 62 ist. Der gesamte Innenbereich des zylindrischen Ventilgehäuses 40 steht aussen am Kolben 62 vorbei in Fluidverbindung mit dem zweiten Druckraum 106. Zu diesem Innenbereich gehört auch der erste, obere Druckraum 104 am gegenüberliegenden oberen Ende des Kolbens 62.

Der Druck in dem ersten, oberen Druckraum 104 wirkt auf das obere Ende des Kolbens 62 und hält den Kolben 62 in Zusammenwirkung mit der Feder 72 in der Schliessstellung. Der zweite, untere Druckraum 106 steht mit dem ersten, oberen Druckraum 104 in Fluidverbindung über den nicht fluiddicht gestalteten Eingriff zwischen dem äusseren Einschraubgewinde 46 des unteren Teiles 42 des zylindrischen Ventilgehäuses 40 und dem Innengewinde der zweiten Bohrung 20 des Ventilkörpers 10 (Figur 2), sowie über einen oder mehrere Durchbrüche 108 am oberen Ende des Gewindes 46, die in der Nähe der Schulter 68 am oberen Ende der Bohrung 63 in den Gehäuseinnenbereich münden sowie über die Zwischenbohrung 73, in welcher die Feder 72 aufgenommen ist und des Weiteren über durch Herstellungstoleranzen bedingte Leckwege entlang den Kolbenumfangsflächen zwischen den Kolbenkopfteil 64 und der unteren Bohrung 63 sowie zwischen dem Kolbenschafteil 66 und der oberen Bohrung 65. Der nicht fluiddicht gestaltete Gewindeeingriff zwischen dem Ventilgehäuse 40 und dem Ventilkörper 10 dient dabei als Gasdruckdrosseleinrichtung. Anstatt der Drosselung über den Gewindeeingriff könnte auch eine Drosselbohrung vom unteren Ende des Ventilgehäuses, z.B. von der konkav geformten Fläche 52 nach oben führen und in der Nähe der Schulter 68 in den Gehäuseinnenbereich münden.

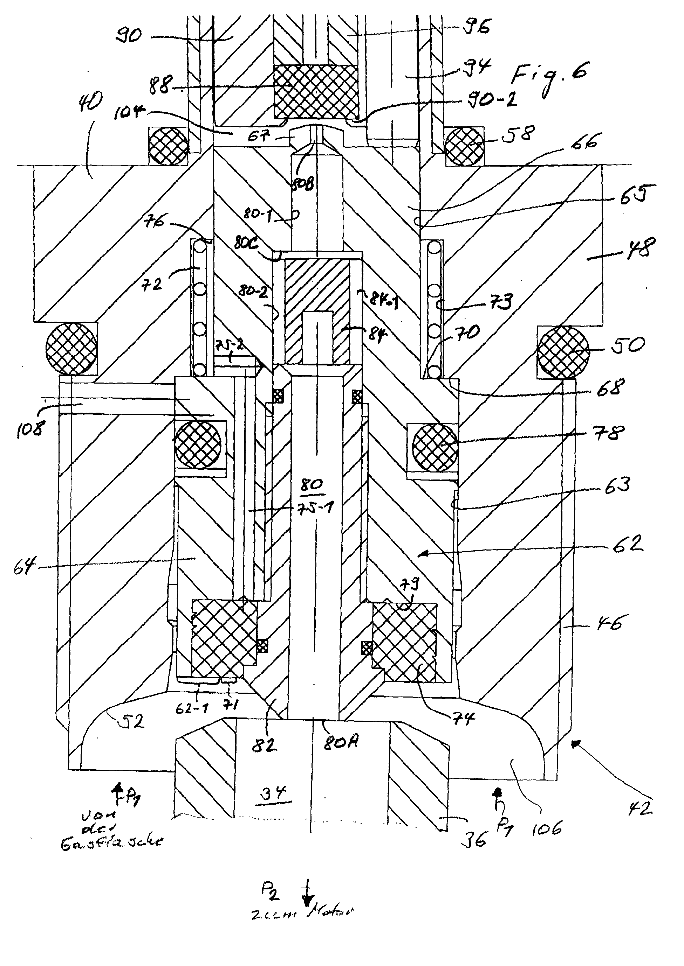

Zum Öffnen des elektromagnetischen Hochdruckgasventils 18 wird die Magnetspule MS erregt, wodurch der untere Anker 90 nach oben bewegt wird und der Dichtring 88 durch die ringförmige Lippe 90-2 am unteren Ende des unteren Ankers 90 von dem verengten Durchlass 80B am oberen Kolbenende abgehoben wird. Dadurch kann der Druck aus dem oberen Druckraum 104 sich abbauen durch den verengten Durchlass 80B, den Kanal 80 in dem Kolben 62 und dem Hohlstift 82 sowie durch die Auslassöffnung 80A in den Abzweigkanal 34 und den Querkanal 28 in die Gaszufuhrleitung (nicht dargestellt) zum Motor. Infolge der Druckentlastung in dem oberen Druckraum 104 kann der Ventilkolben 62 nach oben gedrückt werden durch die Druckbeaufschlagung der ringförmigen Kolbenfläche 62-1 in dem unteren Druckraum 106 am unteren Kolbenende ausserhalb der Dichtfläche 71 des Kolbens 62. Dadurch wird der Dichtring 74 von dem Ventilsitz 36 abgehoben und Druckgas aus der Gasflasche kann aus dem Dberströmkanal 38 durch den unteren, zweiten Druckraum 106 (siehe die Pfeile P₁ und P₂ in den Figuren 4 und 6) in den Abzweigkanal 34 und den Querkanal 28 strömen und gelangt in die Gaszufuhrleitung (nicht dargestellt), welche von der Verschraubung 32 zu dem Motor führt. Es ist zu erwähnen, dass während dem Betrieb des Motors die Betankungsleitung (nicht dargestellt), die an die andere Verschraubung 30 angeschlossen ist durch ein nicht dargestelltes Ventil geschlossen ist. Beim Abheben des Kolbens 62 von dem Ventilsitz 36 wird der obere Anker 92 über den Stift 94 nach oben verschoben und die Schraubenfeder 100 zusammengedrückt. Gleichzeitig wird auch die Schraubenfeder 72 zusammengedrückt, die den oberen Schaftteil 66 des Kolbens 62 umgibt. Bei Betrieb des Motors in der vollständig geöffneten Stellung (Figuren 4 und 6) des Kolbens 62 liegt die Schulterfläche 70 des Kolbens an der Schulterfläche 68 des zylindrischen Ventilgehäuses 40 an. Zum Verschliessen des Ventils 18 wird die Stromzufuhr zu der Magnetspule MS unterbrochen. Die Feder 100 kann nun den Dichtkörper 88 in dem unteren Anker 90 wieder nach unten drücken zum Verschliessen des verengten Durchlasses 80B durch den Dichtkörper 88. Der Druck baut sich dadurch in dem ersten oberen Druckraum 104 oberhalb des Kolbens 62 wieder auf und drückt den Kolben 62 wieder nach unten in die Schliessstellung (Figur 3), in der der Dichtring 74 an dem Ventilsitz 36 anliegt. Diese Bewegung des Kolbens 62 in die untere Schliessstellung wird durch die Schraubenfeder 72 unterstützt.

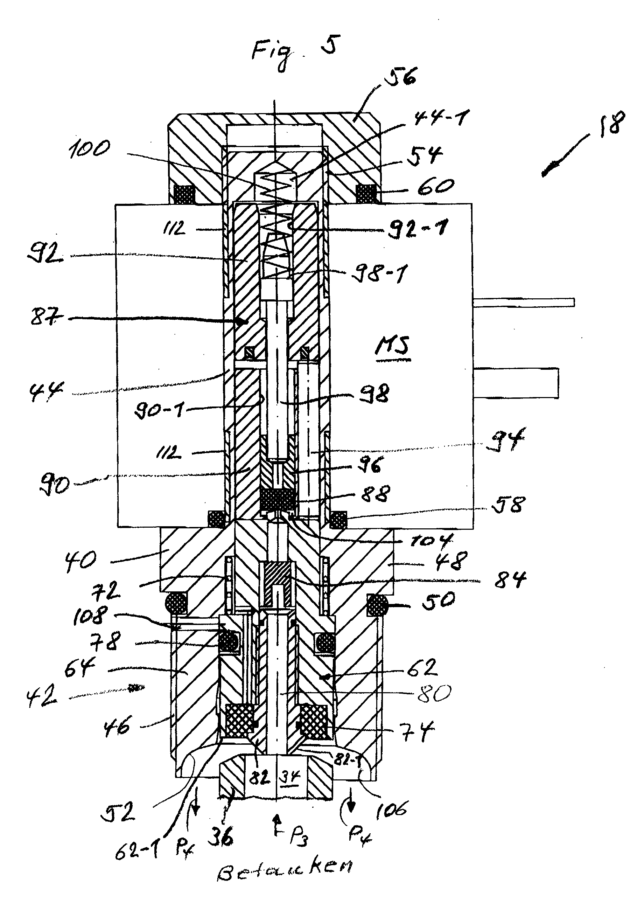

Beim Betanken des Gasbehälters oder Gastanks wird eine äussere, zweite Druckgasquelle an den Querkanal 28 über die Betankungsleitung (nicht dargestellt) angeschlossen. Der Gasdruck der zweiten Druckgasquelle beaufschlagt den Kolben 62 radial innerhalb der Dichtfläche 71, d.h. die untere Stirnfläche 82-1 des Hohlstiftes 82 innerhalb des Ventilsitzes 36, wodurch sich das Ventil 18 öffnet. Durch das Hochdruckgas wird der Hohlstift 82 und somit der Ventilkolben 62 nach oben in Offenstellung gedrängt (Figuren 5 und 6), wobei der Dichtring 74 von dem Ventilsitz 36 abhebt und das Hochdruckgas aus dem Abzweigkanal 34 durch den unteren, zweiten Druckraum 106 in den Überströmkanal 38 (siehe Pfeile P₃ und P₄ in den Figuren 5 und 7) und von dort durch das geöffnete Absperrventil 60 in den Gasbehälter einströmen kann.

Der Kolben 62 bewegt sich nach oben bis die Schulter 70 des Kolbens 62 an der Schulter 68 des Ventilgehäuses 40 anschlägt. Bei der Aufwärtsbewegung des Kolbens wird auch der untere Anker 90 und der Dichtkörper 68 nach oben gedrückt. Auch der obere Anker 92 wird durch den Distanzstift 94 nach oben gedrückt. Beim Betanken wird das Ventil 18 durch den Gasdruck der zweiten Druckgasquelle ohne Erregung der Magnetspule MS geöffnet.

Es wurde festgestellt, dass der Ventilkolben 62 während dem Betanken schwingen kann was zu Geräuschen und Fehlfunktionen führt. Dieses Schwingen tritt auf wenn beim Betanken Hochdruckgas durch den Hohlstift 82 nach oben strömt und durch den verengten Durchlass 80B in den oberen Druckraum 104 austreten kann. Es kann sich somit ein hoher Druck am oberen Kolbenende aufbauen, der den Kolben 62 wieder nach unten zu seiner Schliessstellung drückt. Der Druck in dem oberen Druckraum 106 baut sich dann wieder ab, und der Kolben 62 bewegt sich wieder aufwärts usw., d.h. der Kolben 62 bewegt sich abwechselnd auf- und ab und schwingt oder flattert im Ventilgehäuse 40 wodurch die Geräusche und Fehlfunktionen entstehen.

Um dies zu verhindern ist in dem Gasdruckabbaukanal 80 der Durchflussbegrenzer 84 angeordnet, der durch den Hohlstift 82 zurückgehalten ist und beim Betanken durch den Gasdruck von der zweiten Druckgasquelle gegen die Schulterfläche 80C des Gasdruckabbaukanals 80 gedrückt wird. Dementsprechend kann sich kein hoher Druck in der oberen Druckkammer 106 beim Betanken aufbauen und das Flattern des Ventilkörpers sowie die dadurch bedingten Geräusche und Fehlfunktionen treten nicht mehr auf.

Während dem Betrieb des Motors, d.h. bei Öffnung des Ventils 18 durch Unterstromsetzen der Magnetspule MS zur Aufwärtsbewegung des unteren Ankers 90 und Abheben des Dichtkörpers 88 von dem verengten Durchlass 80B bleibt der Durchflussbegrenzer 84 durch den Druck aus dem oberen Druckraum 104 geöffnet, so dass der Druck aus diesem Druckraum 104 frei um den Durchflussbegrenzer 84 herum nach unten entweichen kann. Bei dem dargestellten Ausführungsbeispiel ist der Durchflussbegrenzer 84 ein im Wesentlichen zylindrischer Körper, der als Einwegventil arbeitet und axiale Strömungskanäle 84-1 an seinem Umfang aufweist, die dauernd mit der Auslassöffnung 80A in Verbindung stehen. Ein anderer Durchflussbegrenzer oder anderes Einwegventil könnte vorgesehen sein wie z.B. ein einfaches Kugelrückschlagventil. Bei dem dargestellten Ausführungsbeispiel besteht der Durchflussbegrenzer 84 aus Messing. Er könnte aber auch aus einem anderen, geeigneten Material wie z.B. Gummi oder dergleichen hergestellt sein.

## Patentansprüche

1. Elektromagnetisches Hochdruckgasventil, insbesondere für ein Gasflaschenventil für einen gasbetriebenen Kraftfahrzeugmotor, mit einem Ventilgehäuse (40), einem in einer Bohrung (63, 65) des Ventilgehäuses (40) zwischen einer Ventiloffenstellung und einer Ventilschliessstellung beweglichen Kolben (62), einer Ankereinrichtung (87) an einem Ende des Kolbens (62) und einer Magnetspule (MS) zur Betätigung der Ankereinrichtung (87), wobei der Kolben (62) am anderen Ende eine ringförmige Dichtfläche (71) aufweist zur Auflage an einem Ventilsitz (36), ein Gasdruckabbaukanal (80) durch den Kolben (62) von einem verengten Durchlass (80B) an dem einen Ende des Kolbens (62) zu einer Auslassöffnung (80A) führt, die an dem anderen Ende des Kolbens (62) radial innerhalb der Dichtfläche (71) liegt, und an dem einen Ende des Kolbens (62) ein erster Druckraum (104) gebildet ist, der teilweise durch den Kolben (62) begrenzt ist und in Fluidverbindung steht mit einem zweiten Druckraum (108), der teilweise durch eine ringförmige Kolbenfläche (62-1) radial ausserhalb der Dichtfläche (71) am anderen Kolbenende begrenzt ist, wobei die Ankereinrichtung (87) einen Dichtkörper (88) hat, der den verengten Durchlass (80B) verschliesst wenn die Magnetspule (MS) entregt ist und durch Erregung der Magnetspule (MS) der Dichtkörper (88) von dem verengten Durchlass (80B) wegzubewegen ist, damit der Gasdruck aus dem ersten Druckraum (104) durch den verengten Durchlass (80B) den Gasdruckabbaukanal (80) und die Auslassöffnung (80A) entweichen kann und der Kolben (62) durch den die ringförmige Kolbenfläche (62-1) beaufschlagenden Gasdruck von einer ersten Druckgasquelle aus der Schliessstellung in die Offenstellung beweglich ist, und wobei in dem Gasdruckabbaukanal (80) eine Einrichtung (84) vorgesehen ist zum Begrenzen der Gasströmung in umgekehrter Strömungsrichtung durch den Gasdruckabbaukanal (80) von der Auslassöffnung (80A) durch den verengten Durchlass (80B) in den ersten Druckraum (104) bei Hochdruckbeaufschlagung des Kolbens (62) radial innerhalb der Dichtfläche (71) an dem anderen Kolbenende über eine zweite Druckgasquelle, um den Kolben bei entregter Magnetspule (MS) in Offenstellung zu drängen.

2. Gasventil nach Anspruch 1, wobei die Einrichtung (84) zum Begrenzen der Gasströmung ein Einwegventil, wie z.B. ein Rückschlagventil ist.

3. Gasventil nach Anspruch 1 oder 2, wobei ein in den Gasdruckabbaukanal (80) eingesetzter Hohlstift (82) die Strömungsbegrenzungseinrichtung (84) in dem Kolben (62) zurückhält und der Gasdruckabbaukanal (80) durch den Hohlstift (82) verläuft.

4. Gasventil nach Anspruch 1, wobei der Kolben (62) an dem anderen Ende mit einem Dichtring (74) versehen ist, der die Dichtfläche (71) aufweist.

5. Gasventil nach Anspruch 4, wobei der Dichtring (74) durch einen im dem Gasdruckabbaukanal (80) befestigten Hohlstift (82) am Kolben (62) zurückgehalten ist, und der Hohlstift (82) auch die Strömungsbegrenzungseinrichtung (84) in dem Gasdruckabbaukanal (80) des Kolbens (62) zurückhält und der Gasdruckabbaukanal (80) durch den Hohlstift (82) verläuft.

6. Gasventil nach einem der Ansprüche 1-5, mit einer in dem Gehäuse (40) angeordneten den Kolben (62) beaufschlagenden Feder (72), um den Kolben (62) in die Schliessstellung zu drücken.

7. Gasventil nach einem der Ansprüche 1-6, wobei die Ankereinrichtung (87) einen ersten Anker (92) aufweist, sowie, zwischen dem ersten Anker (92) und dem Kolben (62) einen zweiten Anker (90) hat und ein Distanzstift (94) zwischen dem ersten Anker (92) und dem Kolben (62) vorgesehen ist.

8. Gasventil nach Anspruch 7, mit einer Feder (100) die den Dichtkörper (88) und über diesen den zweiten Anker (90) in Richtung zu dem Kolben (62) drückt, um den verengten Durchlass (80B) durch den Dichtkörper (88) zu verschliessen.

9. Gasventil nach Anspruch 8, wobei beide Anker (90, 92) je eine Längsbohrung (90-1, 92-1) aufweisen und ein Stift (98) sich aus der Längsbohrung des einen Ankers in die Längsbohrung des anderen Ankers erstreckt, wobei der Stift (98) in dem ersten Anker (92) eine Sitzfläche (98-1) für die Feder (100) hat und in dem zweiten Anker (90) an einem Dichtringtragstück (96) befestigt ist.

10. Gasventil nach Anspruch 8 oder 9, wobei der zweite Anker (90) an seinem kolbenseitigen Ende eine einwärts gerichtete, ringförmige Lippe (90-2) aufweist, die eine Auflagefläche für den Dichtkörper (88) hat und die über einen Vorsprung (67) des Kolbens (62) beweglich ist, der den verengten Durchlass (80B) aufweist.

11. Gasventil nach einem der Ansprüche 1-10, wobei der zweite Druckraum (106) über eine Drosseleinrichtung in Fluidverbindung mit dem Innenbereich des Ventilgehäuses und dem dazu gehörenden ersten Druckraum (104) steht.

12. Gasventil nach Anspruch 11, wobei der zweite Druckraum (106) über mindestens einen Drosseldurchbruch in dem Ventilgehäuse (40) in Fluidverbindung mit dem Innenbereich des Ventilgehäuses (40) ist.

13. Gasventil nach Anspruch 11, wobei ein Durchbruch (108) vom Innenbereich des Ventilgehäuses (40) zu der Ventilgehäuseaussenseite führt und längs einem äusseren Einschraubgewinde (46) des Ventilgehäuses (40) mit dem zweiten Druckraum (106) in Verbindung steht, und wobei das Einschraubgewinde (46) als Drosseleinrichtung wirkt.
